# EUROPEAN PATENT APPLICATION

(11) **EP 4 543 011 A1**
(43) Date of publication of application: **23.04.2025**
(21) Application number: 24199962.2
(22) Date of filing: 12.09.2024
(51) Int. Cl.: H04N 21/222, H04N 21/236, H04N 21/262, H04N 21/44, H04N 21/81, H04N 21/845, H04N 21/858

(54) **METHODS AND SYSTEMS FOR CLIENT-SIDE STITCHER OF STREAMING VIDEO CONTENT**

(30) Priority: 20.10.2023 US 202363591893 P
(71) Applicant: Pluto Inc., West Hollywood, CA 90069 (US)
(72) Inventor: SHANSON, Spencer, 90069 West Hollywood (US); HOSUR, Prabhudev Irappa, 90069 West Hollywood (US); YU, Ke, 90069 West Hollywood (US)
(74) Representative: Durán-Corretjer, S.L.P.

(57) **Abstract**

Methods and systems for streaming content are disclosed. A manifest request is received from a streaming video player. A stitcher service generates the requested manifest, comprising primary content locators for corresponding segments of primary content, a placeholder for a secondary content pod, and an indication as to when the secondary content pod is to be played. The manifest is transmitted to the video player. A session identifier indicating a time to a next secondary content pod is placed on an asynchronous bus and is accessed by a session service. The session service generates a secondary content pod request which is accessed by a secondary content pod service. One or more secondary content pod decisions are generated. A request for a secondary content pod file is received from the video player. The secondary content pod file, comprising locators for items of secondary content is generated and provided to the video player.

## Description

### INCORPORATION BY REFERENCE TO ANY PRIORITY APPLICATIONS

Any and all applications for which a foreign or domestic priority claim is identified in the Application Data Sheet as filed with the present application are hereby incorporated by reference under 37 CFR 1.57.

### BACKGROUND OF THE INVENTION

### Field

The present disclosure is related to video content streaming.

### Description of the Related Art

Streaming media has become an important mechanism for delivering video content to users. However, often items of content come from multiple sources, which then need to be "stitched" together by a stitcher system, which then streams the stitched together content to a client. Disadvantageously, such a conventional stitcher technique can take an inordinate amount of time thereby delaying playback, and can require enormous amounts of dedicated computer resources.

### BRIEF DESCRIPTION OF THE DRAWINGS

Figure 1 illustrates an example architecture and process.
Figure 2A is a block diagram illustrating example components of a content streaming system.
Figure 2B illustrates example modules and services of the content streaming system.

While each of the drawing figures illustrates a particular aspect for purposes of illustrating a clear example, other embodiments may omit, add to, reorder, and/or modify any of the elements shown in the drawing figures. For purposes of illustrating clear examples, one or more figures may be described with reference to one or more other figures, but using the particular arrangement illustrated in the one or more other figures is not required in other embodiments.

### DETAILED DESCRIPTION

The present disclosure describes systems and processes that overcome the above described technical problems as well as the drawbacks of conventional approaches to streaming content to user devices. It is understood that the various aspects disclosed herein may be utilized together (e.g., via common system(s)) or separately.

As similarly discussed elsewhere herein, streaming media has become an important mechanism for delivering video content to users. However, often items of content (e.g., primary content, such as movies or programs, and ancillary content, such as advertisements, station announcements, or other content) come from multiple sources, which then need to be "stitched" together by a stitcher service, which then enables the stitched content to be streamed to a client. Disadvantageously, such a conventional stitcher technique can take an inordinate amount of time, degrading the user viewing experience, and can require enormous, dedicated computer resources.

By way of illustration, conventionally, most if not all the stitcher-related operations are performed by a stitcher service remote from the client player, so that the client player only receives and plays back the stitched content. Where an advertisement is being stitched into a program of primary content, such stitcher-related operations may include accessing ad decisions from an ad-pod service, stitching the ads and clips, serving the stitched playlists containing ad playlists that would impact the efficiency of video-on-demand (VoD) playback start time, ad load tuning features, and/or the like.

In particular, a "stitcher" in the context of online advertising refers to a technology or software component responsible for inserting ads, typically in the form of video or audio ad content, into digital media streams (although the stitcher may be used to insert other kinds of content). This process may involve dynamically integrating advertisements into the content stream at specified ad breaks or ad-pods. For example, the stitcher may prepare the primary content, comprising a video and/or audio stream such as a podcast, five stream, or on-demand video. Advertisers may provide ad inventory, which may include the ad creatives, metadata, and targeting information. Advertisers may also specify ad formats (e.g., pre-roll, mid-roll, post-roll) and ad durations.

Before serving ads, conventionally a stitcher may interface with an ad decisioning system or ad server. This system may use targeting data and rules to determine which ads should be shown to a specific user. Ad decisioning may be based on factors such as the user's demographics, location, viewing habits, and/or the like. The stitcher, along with the ad decisioning system, conventionally schedules the ad placements, deciding when and where ads should appear within the primary content. These placements may be referred to as "ad-pods" and can be inserted at predetermined intervals, such as at the beginning, middle, or end of a video stream.

When it's time to insert an ad, the stitcher service takes the ad creative from the ad server and seamlessly integrates it into the content stream. This integration may involve replacing part of the main content or temporarily displacing it, depending on the ad format and platform.

The stitcher service may facilitate tracking and measurement of ad performance. It monitors ad impressions, click-through rates, viewability, and other relevant metrics. These metrics help advertisers assess the effectiveness of their ad campaigns and may be used to bill the advertisers for the playing of the ads.

The final content, now with ads stitched in, may be delivered to the user's device for playback. The user experiences a continuous stream with ads seamlessly integrated at the specified ad breaks. The stitcher service may also enforce policies related to ad insertion, such as ad volume limits and ad load restrictions.

Stitchers may be used in the context of Dynamic Ad Insertion (DAI), where ads are inserted in real-time based on user data and behavior. This allows for highly personalized ad experiences. Optionally, metadata associated with a dynamically inserted interstitial (e.g., advertisement) may be transmitted to a client player on a user device player in-band with the interstitial or via XML Linking Language (XLink), an XML markup language that enables internal and external links to be created within XML documents, and associating metadata with those links. Optionally, the interstitial (e.g., advertisement) may be transmitted to the client player on the user device player out of band.

Because the stitcher service need not perform operations other than stitching, it will be able to handle a much larger number of requests from user devices. Further, since the stitcher service conventionally waits for all the ads in all program/primary content ad-pods to be filled before the stitcher service sends the stitched manifests to the user device for video playback , there may be a long delay between the time user clicks the "play" control on the client device and the time the video actually starts playing on the device. This provides a poor user experience.

Furthermore, because conventionally all ads are filled before the primary content video starts playing on user device, most of the filled ads may not be billed (leading to low run rate) if the user stops watching the video towards the beginning of the playback or if the user switches to a different video program or channel of videos. In addition, once the ads are filled before the primary content starts playing, the streaming service can no longer control the user's ad experience (e.g., ad loading, ad frequency, etc.), and thus cannot improve the user's viewing experience. Thus, conventional techniques lack asynchronicity.

Still further, because conventionally the stitcher service sends complete VoD manifests at the start time for a given video-on-demand item of primary video content, it is not possible to provide client-side interactivity needed to provide certain user interactivity with the content. For example, conventional stitcher techniques may not be capable of supporting "choose your own adventure" features in video programs (such as movies), wherein the viewer can make choices that determine a character's actions and the plot's outcome. This is because such features require sending new updated manifests during the program playback based on the adventure that the user chooses, and conventional approaches to not accommodate such updated manifests.

In order to overcome the foregoing technical challenges and deficits the following technical solutions may be utilized, including just-in-time on-demand stitching of ancillary content (e.g., ads, any media, metadata, and/or the like), sometimes referred to herein as secondary content, on the client side. The described techniques enable faster initiation of playback of primary content on the client side as the described process does not have to wait for all the secondary content/ad-pods (e.g., a sequence of ads grouped together in the VAST XML which will be displayed one after the other in a single ad break) to be filled prior to transmitting the manifest to the client player and enabling the primary content to be streamed. Instead, placeholder URL entries for ad-pods and/or ads may be inserted into the manifest and the actual ad-pod and/or ad URLs may be provided asynchronously at a later time to the client via "snippet" of a manifest (which may be referred to as an ad-pod file) that includes such actual ad URLs for the ad pod. The client player may then perform the stitching operation using the ad URLs.

In addition, the described techniques enable enhanced user interactivity with streaming content. Still further, the described techniques enable tremendous scalability and greatly reduce the need for centralized processing power as certain stitcher functions are performed in a distributed manner by respective clients hosted on and/or executed by user devices.

Optionally, the disclosed stitcher service only includes, in a playlist manifest, a per session and/or per rendition ad-pod file name, rather than stitching all the ad manifests inline in the manifests. For example, the ad-pod file ad names/URLs may comprise one or more placeholder names/URLs. Optionally, all the ad-pod names/URLs in the manifest (and optionally in multiple or every manifest) may be the same placeholder name/URL. This enables the manifest to be quickly generated and provided to the client by the streaming service, as the streaming service does not have to wait until all the ads in all program ad-pods are filled before the streaming service sends the manifest to the user device for video playback. Advantageously, the streaming service stitcher does not need to know how many ads there are in a given ad-pod, does not have to perform content stitching, and does not have to make ad-pod service calls. Thus, as soon as the client player requests a manifest from the streaming service, the manifest can be sent to the client. Thus, the delay between the time the user clicks the "play" control on the client device and the time the video actually starts playing on the device is significantly shortened as compared to conventional approaches, thereby providing an improved user experience.

Optionally, although the ad-pod names/ad file names/URLs may be placeholders (and so the streaming service does not have to wait for the ad-pod to be filed with actual ads in order to generate the manifest), the names be different to indicate whether a given ad-pod is the first, second, third, etc., ad-pod in the manifest. Optionally, a rule may generate the placeholder URL(s) for a given ad-pod or for a set of ad-pods.

By way of background, a playlist manifest for video streaming is a structured file or document that provides information about a series of video files or segments that are part of a streaming video service. This manifest file is used by the streaming server and client devices to organize and play the video content. The manifest may contain metadata and instructions for the streaming player to request and play the video segments in the correct order. In the HLS protocol, a multivariant playlist describes a list of media playlists along with the resolution, bitrate, and other details of each rendition. A media playlist describes a list of segments or fragments of video and audio data.

Advantageously, because there are no calls from the stitcher to the ad-pod service, and no need to wait until the ad-pods fills all the ads before serving the manifest to the user client player (which may be provided by a downloaded and/or installed application hosted on the user device), the playback of the primary content can start much more quickly, and stitcher performance is significantly improved. In addition, because stitching is performed on the client device (e.g., a networked television, a mobile phone, a laptop, a tablet, a desktop computer, a game console, a wearable, or other computing device) hosting a streaming application, stitcher functionality scalability is greatly improved.

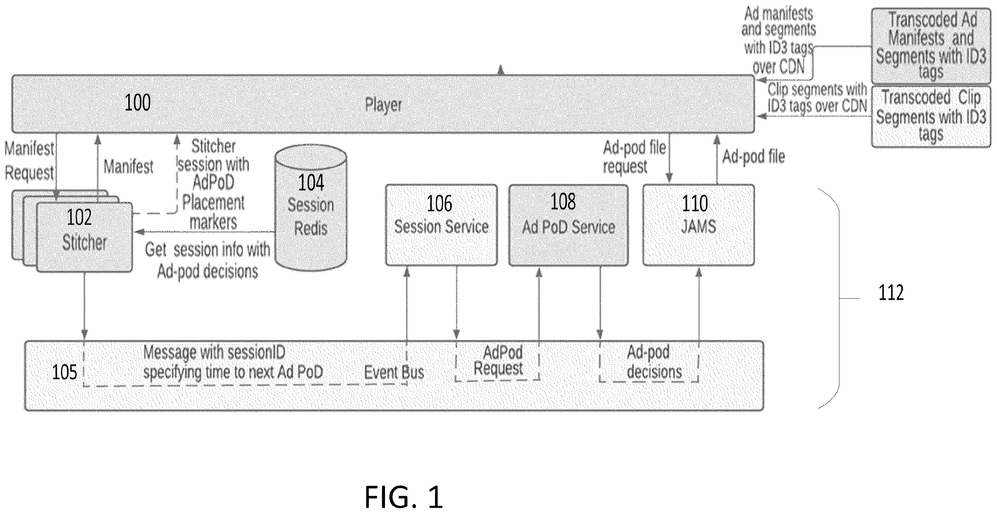

With reference to Figure 1, an example architecture and process are illustrated. It is understood that other architectures may be used. For example, some or all of the functionality of the JAMS (Just-in time Ad manipulation service) 110 can be performed by the stitcher service 102. Further, the JAMS 110 may perform its function using a subset of the programmatic code of the stitcher service 102.

The client player 100 may be an application downloaded and/or installed on a user device (e.g., a mobile phone, tablet, game console, networked television, etc.), or may be a web-based player accessed via a browser on the user device. The player 100 may transmit over a network (e.g., the Internet, other wide area network, an intranet, etc.) a request for a manifest to a content streaming service 112 configured to stream or enable the streaming of video and audio content to user devices. The streaming service 112 may be configured to communicate with one or large numbers of client devices (e.g., connected televisions, smart phones, laptops, desktops, game consoles, streaming devices that connect to televisions or computers, etc.) that comprise video players. By way of example, the video player may be embedded in a webpage, may be a dedicated video player application, may be part of a larger app (e.g., video streaming application configured to display electronic program guides, a game application, a word processing application, etc.), may be hosted by a connected television (CTV), or the like. The streaming service 112 may be configured to provide video-on-demand (VOD) streaming content, linear, time-scheduled streaming video content, free ad supported television content, and/or downloadable video content.

As discussed above, the content streaming service 112 may provide video content on a video-on-demand (VOD) basis to client devices. For example, the content streaming service 112 may provide and/or populate user interfaces presenting representations of a library of content items via a user device, where the user may select a given content item and the selected content item will be substantially immediately streamed to the user device as video-on-demand content.

The streaming service 112 hosted on one or more computer systems may, in addition, provide linear scheduled video content via one or more channels (e.g., themed channels) according to a program schedule, where a given program may have a scheduled start time and end time. For example, a user interface of a program guide may be presented on a user device (e.g., player 100), the program guide listing channels and the start and end times of programs of a given channel over a period of time (e.g., the current time and for a period of 2 or 3 hours thereafter, where the user may be enabled to scroll further forward through the program guide). The user may select a channel (or a program associated with a channel) via the program guide, and the currently scheduled program (and associated secondary content) for that channel will be streamed to the user device at its current scheduled playback position.

Optionally, the streaming service 112 may transmit context information to one or more secondary content source systems, such as ad servers. The secondary content source systems may comply with the VAST protocol. By way of further example, the secondary content source systems may provide public service videos, previews of upcoming programs, quizzes, news, games, and/or other content. The secondary content source systems may use the context information in determining what secondary content (if any) is to be provided or offered to a requesting video player 100.

The streaming service 112 may optionally be hosted on a cloud-based system including a hosted computing environment that includes a collection of physical computing resources that may be remotely accessible and may be rapidly provisioned as needed. Further, the streaming service may include or utilize a hosted storage environment that includes a collection of physical data storage devices that may be remotely accessible and may be rapidly provisioned as needed (sometimes referred to as "cloud" storage). Such cloud storage may be utilized to store some, or all of the data, programs, and content described herein.

A stitcher service 102 may be configured to respond to playlist manifest requests by providing a playlist manifest (e.g., an HLS or MPEG DASH manifest). Conventionally, a stitcher service may be configured to include locators (e.g., URLs) pointing to segments of primary and secondary content (e.g., ad) locators (e.g., URLs) in a manifest. As will be described, the stitcher service 102 disclosed herein may be configured to include in a manifest, locators (e.g., URLs) pointing to segments of primary to be streamed, but instead of including locators pointing to secondary content (e.g., ads or ad pods), placeholder URLs may be included.

The stitcher service 102 may access or receive session information with ad-pod decisions from a data source, such as a Redis in-memory database that persists in non-volatile memory, such as magnetic disc drives. The database may be configured as a data structures server, providing access to mutable data structures via a set of commands, which are sent using a server-client model with TCP sockets and a protocol. Advantageously, the implementation of data structures provides enhanced memory efficiency, so that the data structures utilize less memory compared to the same data structures modeled using a high-level programming language. The ad-pod decisions may indicate how many ad-pods there are for a given item of primary content and the locations (in time, such as at 5, 10, 20, 24, and 33 minutes or other time from the start of a content item) of the ad-pods.

The stitcher service 102 generates a playlist manifest indicating the positions of the ad-pods and returns the manifest to the player 100. However, as similarly discussed elsewhere herein, the stitcher service 102 optionally only includes in the playlist manifest, a per session and/or per rendition ad-pod file name, rather than stitching all the ad manifests inline in the manifest. For example, the ad-pod file name and/or ad entry names/URLs may comprise one or more placeholder names/URLs. Optionally, all the ad-pod names/URLs in the manifest (and optionally in multiple manifests or every manifest) may be the same placeholder name/URL. Thus, optionally the same ad-pod file templated URL (e.g., adpod<sessionID>.json) may be used at all ad-pod begin locations for all ad-pods in the manifest(s). This enables the manifest to be quickly generated and provided to the player 100 by the stitcher service 102, as the stitcher service 102 does not have to wait until all (or optionally any) of the ads in all content item ad-pods are filled before the stitcher service 102 sends the manifest to the player 100 for video playback. Thus, as discussed above, the delay between the time the user clicks the "play" control on the player 100 and the time the video actually starts playing is reduced enabling quicker playback.

Optionally, although the ad-pod names/URLs may be placeholders, the names may be different to indicate whether a given ad-pod is the first, second, third, etc., ad-pod in the manifest. Optionally, a rule may generate the placeholder name(s)/URL(s) for a given ad-pod or for a set of ad-pods (e.g., where the rule may specify a common text for each names/URL(s) and specify that a corresponding placement or sequence number or other indicator be added to respective placeholder names/URLs.

At about the same time as transmitting the manifest to the player 100 (or some time thereafter) the stitcher service 102 may place a "next ad-pod start time for the session" opportunity location message on an event bus 105. This message may include a sessionID, specifying the time to the next ad-pod. The message may optionally specify the number of ad opportunities at respective specified times.

The event bus 105 is a communication mechanism that facilitates the exchange of messages, events, or data between different components, modules, or services within an application. The use of the event bus advantageously enables asynchronous communication to an ad-pod service 108 (via a session service 106) and enables the ad-pod service 108 to make its own decisions as to when to fill the ad-pods. For example, the session service 106 may determine when to place the ad-pod request on the event bus 105 (e.g., as soon as the session service 106 receives the message from the stitcher service 102, or other time) and how many ad-pod requests are to be placed on the event bus 105 at a time (e.g., 1, 2, 3, half, or all ad-pod requests).

Thus, the delivery of the manifest by the stitcher service 102 to the player 100 may be decoupled from the selection of ads and the populating of an ad-pod with ads.

When the ad-pod service 108 determines when to fill the ad-pods (e.g., based on network latencies, network or system loading, processor workload, etc.), the ad-pod service 108 may place the ad-pod decisions on the event bus 105. Advantageously, the ad-pod service 108 can decide (e.g., based on business logic (e.g., rules or algorithms that handle the exchange of information between a data source and user interface), revenue goals, user-type, session behavior, and/or the like) how many ads should be included in the ad-pod and/or the lengths of such ads in real time. Further, the ad-pod service may determine that no ads should be included in the ad-pod, or that other forms of content (e.g., still images, other video content, etc.) or events are to be included in the ad-pod. Thus, real time control may be provided over how many ads in an ad pod are to be filled and, on the ad-pod length. For example, the number of ads in sequential ad-pods may be reduced in real time, enabling the number of ads in ad-pods to be progressively reduced as the playback of the primary content progresses.

The client video player 100 on the user device may determine the next ad-pod start point by looking ahead in the manifests to identify upcoming ad-placeholder URLs (e.g., provided as per HLS interstitials and MPEG-DASH xLink specifications). The look-ahead interval may be pre-set or dynamically adjusted based on media buffer level in the client. Optionally, the stitcher may place additional tags to trigger an event in the client ahead of time, before the ad-pod in the manifest, so as to improve the client's ability to identify the upcoming ad-pods containing the placeholder URLs. Optionally, these events may be custom event messages, optionally ID3 or SCTE-35 messages, pre-constructed by the stitcher and included in the manifest. In addition or instead, scheduling information stored in memory (e.g., that specifies when an item of primary content is scheduled to start, insertion times/start times for individual ads or ad-pods to be inserted within the primary content, and/or the like) may be used to identify the start of an ad or ad-pod.

The video player 100 may determine that placeholder URLs are in the manifest (e.g., by determining that an ad-pod name in the manifest I reserved for placeholders). At least partly in response to some or all of the foregoing determinations, the video player 100 may then make a request to an ad server or the JAMS 110 requesting an ad-pod file (e.g., a manifest snippet including only the ads for the requested ad-pod file) using the corresponding locator (e.g., URL) in the manifest. Optionally, in contrast to certain streaming protocols (e.g., DASH), the video player 100 does not have to augment the request with additional data.

The JAMS 110 may then provide the requested manifest file snippet containing one or more manifests, one or more actual ad media segment URLs, and/or information to generate ad media segment URLs to the video player 100. Optionally, the JAMS 110 may also include associated beacon URLs in the manifest snippet or in a separate json file (e.g., to avoid blocking mechanisms). When the corresponding ad is played, the beacon sends a request to a remote server, indicating that the ad has been viewed. This enables user engagement to be monitored.

The video player 100 may parse the ad-pod manifest file, which may be in the form of a JSON file, that provides information about the ads to be played during an ad break, such as the manifest URLs or references to the individual ad files, their order, targeting information, and other relevant details. The video player 100 may request the manifests/files for the ads (or other content or actions specified in the manifest snippet) using the manifest URLs. The video player 100 receives the requested manifest snippet

(also referred to as an ad-pod file) and stitches the ads with the primary content clip during playback. The ads may then be played back accordingly. Advantageously, because the player 100 requests and stitches ad-pods just when it needs them in a just-in-time manner, the ad-pods will be fully used as desired (e.g., as determined via business logic, revenue goals, user-type, session behavior, etc., where the foregoing parameters may determine that an ad-pod should not be fully populated with ads), and the ad run rate will be high.

Although the foregoing examples refer to just-in-time on-demand client side stitcher of ads and ad-pods, the described techniques herein may be similarly applied to stitcher sub-clips for interactive content, such as "choose your own ending" or "choose your own adventure" interactive programs.

The foregoing techniques also enable scrubbing (e.g., quickly navigating, via the client player, through the video by dragging a slider, timeline bar, or like control back and/or forth) through a video by a user during an ad break/ad-pod, and then resuming playing of the video with the remaining ads in the ad-pods once the scrubbing ends. Further, the foregoing techniques also enable scrubbing past one or more ad-pods at the beginning of an item of primary content, as soon as playback begins. Optionally, the client player may or may not play ads if the user scrubbing occurs within a specified threshold of time after the playback starts.

Advantageously, the video playback time is efficiently used, while dead air (a period where no video content is played) is avoided, as the client player requests and stitches ads in an ad-pod just when it needs them in a just-in-time manner. This ensures that the ad run rate will be high, wherein most or all of the ad-pods will be used (including most or all of the ads in a given ad-pod) as described above, with few if any ad-pods going unused. This also advantageously ensures that advertisers may be charged for most or all of the ads in the ad-pods.

Further, as discussed elsewhere herein, the disclosed techniques provided enhanced technical control over how many ad slots are to be filed, the maximum length of an ad pod, and the like. For example, logic, user-type, session behavior, and/or the like may be used to determine the number of ads and the length of an ad-pod. Optionally, for example, the number of ads and/or ad-pods may be reduced as an item of primary content playback progresses, as similarly described elsewhere herein.

Optionally, an ad-pod manifest file may be filled (or overwritten) only at certain times based on the initial ad-pod start markers. Therefore, ads may be played on the client based on the total time that has passed watching the movie, rather than based solely on the playhead position (e.g., where the playhead marks the current position in the timeline/scrubber bar). For example, assume that the original ad-pod start markers are positioned at 5 minutes, 15 minutes, and 25 minutes in a primary content item. If the user plays the content for 10 minute ( including the primary content and an ad-pod at 5 minutes into the primary content) and then scrubs the primary content item back and forth past the 15 minute and 25 minute markers, the player will not play, and the user will not see, any ads until at least 15 minutes (which is the next original ad marker time) have passed of actual playing time. This is in contrast to certain conventional techniques, where an ad would immediately be played as soon as the user scrubbed past the 15 minute marker and resumed playback. This may result in too many ads being displayed in too short a time, providing a poor user experience, potentially violating business rules, and potentially inducing the user to stop watching the streaming content.

Optionally, the ads in a given ad-pod may be cached in a CDN (Content Delivery Network) cache (e.g., in proxy servers that are located closer to end users than origin servers) so that they can be fetched more quickly and efficiently. In addition or instead, a client player cache may be prewarmed with ads so that the client does not have to later request such ads, and instead the ads may be accessed and played from the cache. For example, the player may be instructed (e.g., by the streaming service system) to make a call at specified intervals (e.g., every 10 seconds, 45 seconds, 2 minutes, or other time interval) for ads which when received may be stored in the player cache for later playback.

It is understood that although reference may be made to ads, that disclosed processes and systems may be utilized with respect to other types of secondary content and actions.

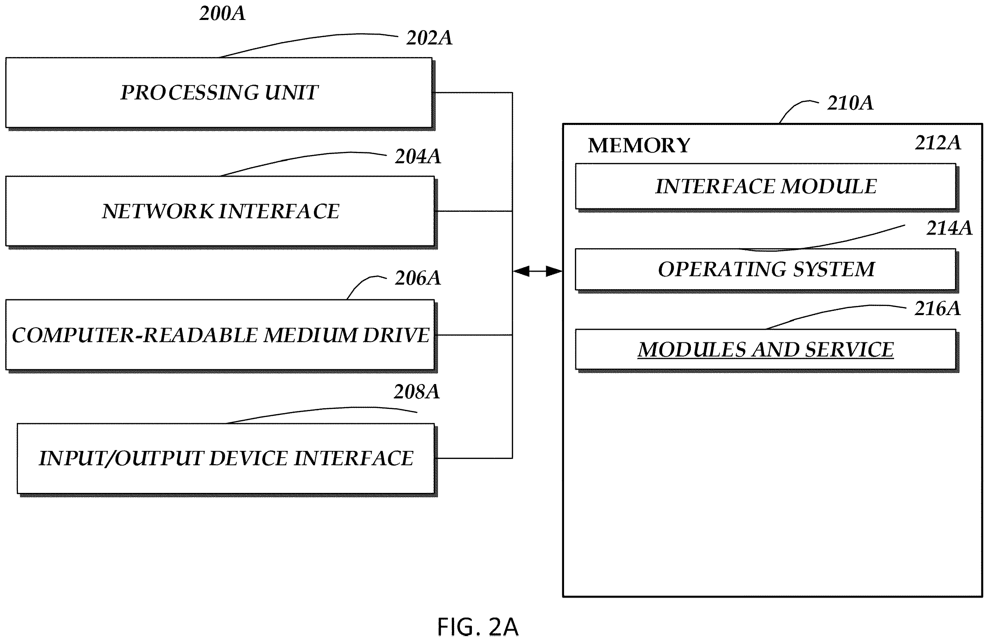

Figure 2A is a block diagram illustrating example components of a content streaming system 200A which may host the content streaming service 112. The example content streaming system 200A includes an arrangement of computer hardware and software components that may be used to implement aspects of the present disclosure. Those skilled in the art will appreciate that the example components may include more (or fewer) components than those depicted in Figure 2A. The streaming system 200A may optionally be a cloud-based system including a hosted computing environment that includes a collection of physical computing resources that may be remotely accessible and may be rapidly provisioned as needed. Further, the streaming system 200A may include or utilize a hosted storage environment that includes a collection of physical data storage devices that may be remotely accessible and may be rapidly provisioned as needed (sometimes referred to as "cloud" storage). Such cloud storage may be utilized to store some, or all of the data, programs, and content described herein.

The content streaming system 200A may include one or more processing units 202A comprising one or more processing devices (e.g., a general purpose processor, an encryption processor, a video transcoder, and/or a high speed graphics processor), one or more network interfaces 204A, a non-transitory computer-readable medium drive 206A, and an input/output device interface 208A, all of which may communicate with one another by way of one or more communication buses. The network interface 204A may provide the various services described herein with connectivity to one or more networks (e.g., the Internet, local area networks, wide area networks, personal area networks, etc.) and/or computing systems (e.g., secondary content source systems, client devices, etc.). The processing unit 202A may thus receive information, content, and instructions from other computing devices, systems, or services via a network, and may provide information, content (e.g., streaming video content, manifests, ad-pod files, content item previews, downloadable content, electronic program guides, etc.), and instructions to other computing devices, systems, or services via a network. The processing unit 202A may also communicate to and from non-transitory computer-readable medium drive 206A and memory 210A and further provide output information via the input/output device interface 208A. The input/output device interface 208A may also accept input from various input devices, such as a keyboard, mouse, digital pen, touch screen, microphone, camera, etc.

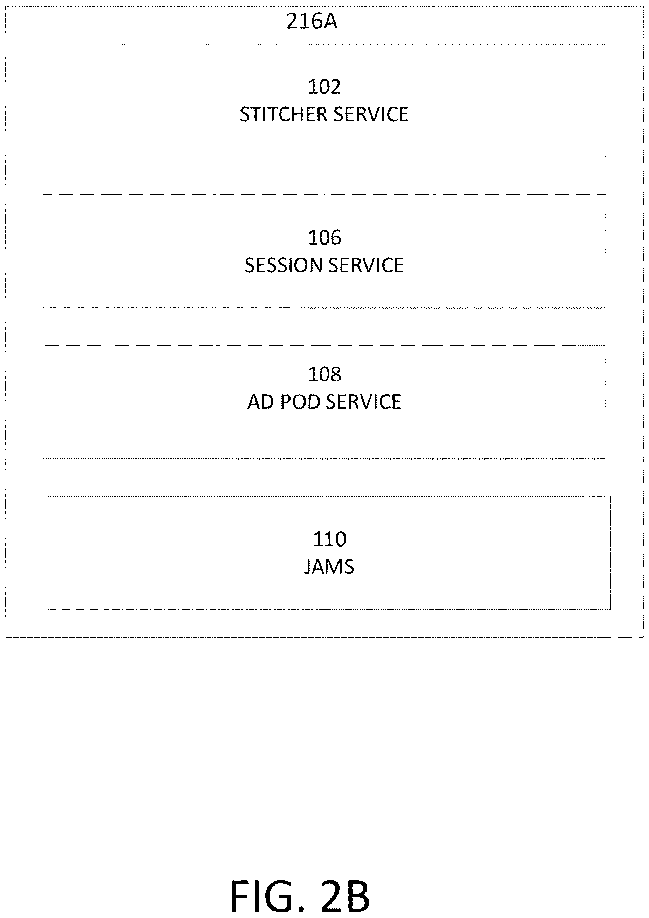

The memory 210A may contain computer program instructions that the processing unit 202A may execute to implement one or more aspects of the present disclosure. The memory 210A generally includes RAM, ROM and/or other persistent or non-transitory computer-readable storage media. The memory 210A may include cloud storage. The memory 210A may store an operating system 214A that provides computer program instructions for use by the processing unit 202A in the general administration and operation of the modules and services 216A, including its components. The modules and services 216A are further discussed with respect to Figure 2B and elsewhere herein. The memory 210A may further include other information for implementing aspects of the present disclosure.

The memory 210A may include an interface module 212A. The interface module 212A can be configured to facilitate generating one or more interfaces through which a compatible computing device may send to, or receive from, the modules and services 216A.

The modules or components described above may also include additional modules or may be implemented by computing devices that may not be depicted in Figures 2A and 2B. For example, although the interface module 212A and the modules and services 216A are identified in Figure 2B as single modules, the modules may be implemented by two or more modules and in a distributed manner. By way of further example, the processing unit 202A may optionally include a general purpose processor and may optionally include a video codec.

The system 104 may offload certain compute-intensive portions of the modules and services 216A (e.g., transcoding and/or transrating a stream for adaptive bitrate operations, compositing, and/or the like) to one or more dedicated devices, such as a video codec (e.g., H.264 encoders and decoders), while other code may run on a general purpose processor. The system 104 may optionally be configured to support multiple streaming protocols (e.g., HLS, MPEG DASH, etc.), may provide low latency pass-through, and may support a large number of parallel streams (e.g., HD, 4K, and/or 8K streams).

The processing unit 202A may include hundreds or thousands of core processors configured to process tasks in parallel. A GPU may include high speed memory dedicated for graphics processing tasks. As another example, the system 104 and its components can be implemented by network servers, application servers, database servers, combinations of the same, and/or the like, configured to facilitate data transmission to and from data stores, user terminals, and third party systems via one or more networks. Accordingly, the depictions of the modules are illustrative in nature.

Referring to Figure 2B the modules and services 216A may include modules that provide the stitcher service 102, the session service 106, the ad pod service 108, and the JAMS 110.

As similarly discussed above, the stitcher service 102 may receive and process requests for playlist manifests from user device clients (e.g., video players). The stitcher service 102 may be configured to respond to playlist manifest requests by providing a playlist manifest (e.g., an HLS or MPEG DASH manifest) comprising manifest locators (e.g., URLs) pointing to segments of primary content and ad-pod placeholder URLs.

For example, a user device client (e.g., a video player hosted on a client device) may transmit a request for content in the form of a request for a playlist manifest (e.g., a static HLS .m3u8 or an MPEG DASH .mpd manifest file). The request may be for an item of primary content, such as a movie or episode. The request or other communication may identify user device characteristics such as device manufacturer, device model, display size (e.g., display height and width in pixels), device height/width ratio, device operating system, and/or other information.

The request for an item of content (and hence the playlist manifest) may have been triggered by the user manually clicking on a play control or other control, or the request may have been automatically issued by an application or webpage executing on the user device. For example, if the user has completed playing a first movie (or other content, such as a program episode), an application on the user device may automatically request a playlist manifest for the next scheduled movie (or other item of content).

The next scheduled item of contents may be scheduled in accordance with a program guide, where the program guide may include multiple channels (e.g., corresponding to different subject matters), where a given channel has associated programs (e.g., movies or other items of content) with scheduled start and end times. Thus, for example, a playlist manifest for a program may be automatically requested based at least in part on a comparison of the current time and the scheduled starting time for the item of content. If the difference between the current time and the scheduled starting time satisfies a threshold (which could be 0 seconds, or some larger number (e.g., 0.5, 1, or 2 seconds) to enable buffering of the program prior to the start time), the corresponding playlist manifest may be automatically requested and provided to the stitcher system.

The request from the video player on the user device for a playlist manifest may be received over a network (e.g., a wired or wireless network) by the stitcher service 102. The location and length of secondary content pods within the requested primary content may be identified. For example, a file or other metadata associated with the primary content may be accessed that indicates the positions within the primary content for secondary content pods, wherein a given secondary content pod may have a specified length (e.g., 15 seconds, 30 seconds, 1 minute, 2 minutes, or other length). The stitcher service 102 may construct the requested playlist manifest, with locators (e.g., URLs) for the primary content.

For example, the manifest file may be an HLS .m3u8 or an MPEG DASH .mpd static manifest file. The manifest file may include locators (URLs) for each primary content and segment and may include placeholder names/URLs for secondary content pods, in the desired playback order. The manifest file may optionally include the entire playlist for the requested item of primary content.

The playlist manifest may be transmitted by the stitcher service 102 to the video player on the user device which is received by the video player on the user device. At about the same time as transmitting the manifest to the player (or some time thereafter) the stitcher service 102 may place a "next ad-pod start time for the session" opportunity location message on an event bus, where the message may include a sessionID, specifying the time to next ad-pod. The message may optionally specify there are a specified number of ad opportunities at respective specified times.

The session service 106 may receive the stitcher service message from the event bus, determine when to place the ad-pod request the on event bus (e.g., as soon as the session service 106 receives the message from the stitcher service 102, or other time), and how many ad-pod requests are to be placed on the event bus 105 at a time (e.g., 1, 2, 3, half, or all ad-pod requests).

The ad pod service 108 may be configured to determine when to fill the ad-pods (e.g., based on network latencies, network or system loading, processor workload, business logic, revenue goals, user-type, session behavior, and/or the like, etc.). The ad-pod service 108 may place the ad-pod decisions on the event bus. Advantageously, the ad-pod service 108 can decide (e.g., based on business logic, revenue goals, user-type, session behavior, and/or the like) how many ads should be included in the ad-pod and/or the lengths of such ads in real time.

The JAMS 110 is configured to respond to an an-pod request from a video player by providing the requested ad-pod manifest "snippet" file to the video player 100. Optionally, the JAMS 110 may also include associated beacon URLs in the manifest snippet or in a separate json file.

Aspects of the present disclosures are additionally discussed in the document attached hereto as Appendix A and titled "Server-initiated client-side just-in-time stitching in VoD ABR streaming", the contents of which are incorporated herein in its entirety by reference.

Thus, systems and methods are described configured to decouple the provision of a manifest file from the population of ad pods (or other content pod or action) and enable just-in-time on-demand stitcher of ancillary content (e.g., ads and ad content) on the client side (e.g., by a video player on a client device). The disclosed techniques provide enhanced scalability of stitcher operations, and quicker initiation of content playback.

An aspect of the present disclosure relates to methods and systems for streaming content. A manifest request is received from a streaming video player via a content streaming system. A service, such as a stitcher service, generates the requested manifest, comprising primary content locators for corresponding segments of primary content, a placeholder for a secondary content pod, and optionally an indication as to when the secondary content pod is to be played. The manifest is transmitted to the video player. A session identifier indicating a time to a next secondary content pod is provided (e.g., placed on an asynchronous bus) and is accessed by a session service. The session service generates a secondary content pod request which is accessed by a secondary content pod service. One or more secondary content pod decisions are generated. A request for a secondary content pod file is received from the video player. The secondary content pod file, comprising locators for items of secondary content, is generated and provided to the video player.

An aspect of the present disclosure relates to a system configured to provide distribution of video content over a network, the system comprising: a computer device; a network interface; non-transitory computer readable memory having program instructions stored thereon that when executed by the computer device cause the system to perform operations comprising: receive, via the network interface, from a video player a request for a manifest, wherein the video player is configured to receive and play at least streaming video content; generate, using a stitcher service, the requested manifest, the generated manifest comprising primary content locators for corresponding segments of primary content, a placeholder for a secondary content pod, and an indication as to when the secondary content pod is to be played with respect to a beginning of the primary content; transmit the requested manifest, comprising the comprising primary content locators, the placeholder for a secondary content pod and the indication as to when the secondary content pod is to be played with respect to the beginning of the primary content, to the video player; provide, on an asynchronous bus, a session identifier indicating a time to a next secondary content pod; receive, at a session service via the asynchronous bus, the session identifier indicating the time to the next secondary content pod; generate, via the session service, a secondary content pod request; provide, on the asynchronous bus, the secondary content pod request; access, via a secondary content pod service, the secondary content pod request; generate, using the secondary content pod service, one or more secondary content pod decisions, comprising a decision as to how many items of secondary content are to be included in the secondary content pod; receive, via the network interface, a request for a secondary content pod file from the video player; generate the secondary content pod file, comprising locators for items of secondary content; and transmit, via the network interface, the secondary content pod file to the video player.

Optionally, the system is configured to transmit metadata associated with the secondary content to the video player in-band with the secondary content, via a link, and/or out of band. Optionally, the stitcher service is configured to include in the manifest a plurality of placeholders for respective secondary content pods, wherein each placeholder is identical. For example, the xlink and interstitals URL may optionally be identical in all ad-pods. However, different manifest snippets (e.g., JSON and period files) may be placed at that URL just-in-time based on the session continuity and time at which the snippets are being requested. Optionally, the placeholder for the secondary content pod is dynamically generated using a rule. Optionally, the system is configured to transmit the manifest to the video player prior to filling the secondary content pod with secondary content identifiers. Optionally, the secondary content pod file is generated using a service separate from the stitcher service. Optionally, the system is configured to dynamically reduce or increase a quantity of secondary items that are included in subsequent secondary content pod files transmitted to the video player. Optionally, the system is configured to fill the secondary content file based at least in part on an initial secondary content pod marker. Optionally, the system is configured to dynamically adjust a length of at least one secondary content pod based at least in part on a rule, an algorithm, a user-type, and/or a session behavior. Optionally, the system is configured to instruct the video player to request secondary content at specified time intervals, thereby enabling a video player cache to be prewarmed with second content items.

An aspect of the present disclosure relates to a computer-implemented method, the method comprising: receiving over a network at a content distribution system comprising one or more processing devices, a request for a manifest from a streaming content player; generating by the content distribution system the requested manifest, the generated manifest comprising primary content locators for corresponding segments of primary content, a placeholder for a secondary content pod, and an indication as to when the secondary content pod is to be played; transmitting by the content distribution system the requested manifest, comprising the comprising primary content locators, the placeholder for a secondary content pod and the indication as to when the secondary content pod is to be played, to the streaming content player; providing a session identifier indicating a time to a next secondary content pod to a session service, the session identifier indicating the time to the next secondary content pod; generating, via the session service, a secondary content pod request; providing the secondary content pod request to a secondary content pod service; generating, using the secondary content pod service, one or more secondary content pod decisions, comprising a decision as to how many items of secondary content are to be included in the secondary content pod; receiving from the streaming content player a request for a secondary content pod file; generating the secondary content pod file, comprising locators for items of secondary content; and transmitting over the network the secondary content pod file to the streaming content player.

Optionally, the content distribution system is configured to include in the manifest a plurality of placeholders for respective secondary content pods, wherein each placeholder is identical. Optionally, the method further comprises dynamically generating the placeholder for the secondary content pod using a rule. Optionally, the method further comprises transmitting the manifest to the streaming content player prior to filling the secondary content pod with secondary content identifiers. Optionally, the method further comprises dynamically reducing or increasing a quantity of secondary items that are included in subsequent secondary content pod files transmitted to the streaming content player. Optionally, the method further comprises filling the secondary content file based at least in part on an initial secondary content pod marker. Optionally, the method further comprises dynamically adjusting a length of at least one secondary content pod based at least in part on a rule, an algorithm, a user-type, and/or or a session behavior. Optionally, the method further comprises instructing, via the content distribution system, the streaming content player to request secondary content at specified time intervals, thereby enabling a streaming content player cache to be prewarmed with second content items.

An aspect of the present disclosure relates to a non-transitory computer readable memory having program instructions stored thereon that when executed by at least one computing device cause the at least one computing device to perform operations comprising: receive a request for a manifest from a streaming content player; generate the requested manifest, the generated manifest comprising primary content locators for corresponding segments of primary content, a placeholder for a secondary content pod, and an indication as to when the secondary content pod is to be played; provide the requested manifest, comprising the comprising primary content locators, the placeholder for a secondary content pod and the indication as to when the secondary content pod is to be played, to the streaming content player; generate a secondary content pod request; generate one or more secondary content pod decisions, comprising a decision as to how many items of secondary content are to be included in the secondary content pod; receive from the streaming content player a request for a secondary content pod file; generate the secondary content pod file, comprising locators for items of secondary content; and provide the secondary content pod file to the streaming content player. Optionally, the operations further comprise dynamically generating the placeholder for the secondary content pod using a rule.. Optionally, the operations further comprise transmitting the manifest to the streaming content player prior to filling the secondary content pod with secondary content identifiers. Optionally, the operations further comprise dynamically reducing a quantity of secondary items that are included in subsequent secondary content pod files transmitted to the streaming content player. Optionally, the operations further comprise dynamically adjusting a length of at least one secondary content pod based at least in part on a rule, an algorithm, a user-type, and/or or a session behavior.

Depending on the embodiment, certain acts, events, or functions of any of the processes or algorithms described herein can be performed in a different sequence, can be added, merged, or left out altogether (e.g., not all described operations or events are necessary for the practice of the algorithm). Moreover, in certain embodiments, operations or events can be performed concurrently, e.g., through multi-threaded processing, interrupt processing, or multiple processors or processor cores or on other parallel architectures, rather than sequentially.

The various illustrative logical blocks, modules, routines, and algorithm steps described in connection with the embodiments disclosed herein can be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular application and design constraints imposed on the overall system. The described functionality can be implemented in varying ways for each particular application, but such implementation decisions should not be interpreted as causing a departure from the scope of the disclosure.

Moreover, the various illustrative logical blocks and modules described in connection with the embodiments disclosed herein can be implemented or performed by a machine, such as a processor device, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components. A computing environment can include any type of computer system, including, but not limited to, a computer system based on a microprocessor, a mainframe computer, a digital signal processor, a portable computing device, a device controller, or a computational engine within an appliance, to name a few.

The elements of a method, process, routine, or algorithm described in connection with the embodiments disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

Conditional language used herein, such as, among others, "can," "may," "might," "may," "e.g.," and the like, unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without other input or prompting, whether these features, elements and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

While the phrase "click" may be used with respect to a user selecting a control, menu selection, or the like, other user inputs may be used, such as voice commands, text entry, gestures, etc. User inputs may, by way of example, be provided via an interface, such as via text fields, wherein a user enters text, and/or via a menu selection (e.g., a dropdown menu, a list or other arrangement via which the user can check via a check box or otherwise make a selection or selections, a group of individually selectable icons, etc.). When the user provides an input or activates a control, a corresponding computing system may perform the corresponding operation. Some or all of the data, inputs and instructions provided by a user may optionally be stored in a system data store (e.g., a database), from which the system may access and retrieve such data, inputs, and instructions. The notifications and user interfaces described herein may be provided via a Web page, a dedicated or non-dedicated phone application, computer application, a short messaging service message (e.g., SMS, MMS, etc.), instant messaging, email, push notification, audibly, and/or otherwise.

The user terminals described herein may be in the form of a mobile communication device (e.g., a cell phone), laptop, tablet computer, interactive television, game console, media streaming device, head-wearable display, networked watch, etc. The user terminals may optionally include displays, user input devices (e.g., touchscreen, keyboard, mouse, voice recognition, etc.), network interfaces, etc. While the above detailed description has shown, described, and pointed out novel features as applied to various embodiments, it can be understood that various omissions, substitutions, and changes in the form and details of the systems, devices or algorithms illustrated can be made without departing from the spirit of the disclosure. As can be recognized, certain embodiments described herein can be embodied within a form that does not provide all of the features and benefits set forth herein, as some features can be used or practiced separately from others. The scope of certain embodiments disclosed herein is indicated by the appended claims rather than by the foregoing description. All changes which come within the meaning and range of equivalency of the claims are to be embraced within their scope.

## Claims

1. A system configured to provide distribution of video content over a network, the system comprising:
a computer device;
a network interface;
non-transitory computer readable memory having program instructions stored thereon that when executed by the computer device cause the system to perform operations comprising:
receive, via the network interface, from a video player a request for a manifest, wherein the video player is configured to receive and play at least streaming video content;
generate, using a stitcher service, the requested manifest, the generated manifest comprising primary content locators for corresponding segments of primary content, a placeholder for a secondary content pod, and an indication as to when the secondary content pod is to be played with respect to a beginning of the primary content;
transmit the requested manifest, comprising the comprising primary content locators, the placeholder for a secondary content pod and the indication as to when the secondary content pod is to be played with respect to the beginning of the primary content, to the video player;
provide, on an asynchronous bus, a session identifier indicating a time to a next secondary content pod;
receive, at a session service via the asynchronous bus, the session identifier indicating the time to the next secondary content pod;
generate, via the session service, a secondary content pod request;
provide, on the asynchronous bus, the secondary content pod request;
access, via a secondary content pod service, the secondary content pod request;
generate, using the secondary content pod service, one or more secondary content pod decisions, comprising a decision as to how many items of secondary content are to be included in the secondary content pod;
receive, via the network interface, a request for a secondary content pod file from the video player;
generate the secondary content pod file, comprising locators for items of secondary content; and
transmit, via the network interface, the secondary content pod file to the video player.

2. The system as defined in Claim 1, wherein the system is configured to transmit metadata associated with the secondary content to the video player in-band with the secondary content, via a link, and/or out of band.

3. The system as defined in Claim 1, wherein the stitcher service is configured to include in the manifest a plurality of placeholders for respective secondary content pods, wherein each placeholder is identical.

4. The system as defined in Claim 1, wherein the placeholder for the secondary content pod is dynamically generated using a rule.

5. The system as defined in Claim 1, wherein the system is configured to transmit the manifest to the video player prior to filling the secondary content pod with secondary content identifiers.

6. The system as defined in Claim 1, wherein the secondary content pod file is generated using a service separate from the stitcher service.

7. The system as defined in Claim 1, wherein the system is configured to dynamically reduce or increase a quantity of secondary items that are included in subsequent secondary content pod files transmitted to the video player.

8. The system as defined in Claim 1, wherein the system is configured to fill the secondary content file based at least in part on an initial secondary content pod marker.

9. The system as defined in Claim 1, wherein the system is configured to dynamically adjust a length of at least one secondary content pod based at least in part on a rule, an algorithm, a user-type, and/or a session behavior.

10. The system as defined in Claim 1, wherein the system is configured to instruct the video player to request secondary content at specified time intervals, thereby enabling a video player cache to be prewarmed with second content items.

11. A computer-implemented method, the method comprising:
receiving over a network at a content distribution system comprising one or more processing devices, a request for a manifest from a streaming content player;
generating by the content distribution system the requested manifest, the generated manifest comprising primary content locators for corresponding segments of primary content, a placeholder for a secondary content pod, and an indication as to when the secondary content pod is to be played;
transmitting by the content distribution system the requested manifest, comprising the comprising primary content locators, the placeholder for a secondary content pod and the indication as to when the secondary content pod is to be played, to the streaming content player;
providing a session identifier indicating a time to a next secondary content pod to a session service, the session identifier indicating the time to the next secondary content pod;
generating, via the session service, a secondary content pod request;
providing the secondary content pod request to a secondary content pod service;
generating, using the secondary content pod service, one or more secondary content pod decisions, comprising a decision as to how many items of secondary content are to be included in the secondary content pod;
receiving from the streaming content player a request for a secondary content pod file;
generating the secondary content pod file, comprising locators for items of secondary content; and
transmitting over the network the secondary content pod file to the streaming content player.

12. The computer-implemented method as defined in Claim 11, wherein the content distribution system is configured to include in the manifest a plurality of placeholders for respective secondary content pods, wherein each placeholder is identical.

13. The computer-implemented method as defined in Claim 11, the method further comprising dynamically generating the placeholder for the secondary content pod using a rule.

14. The computer-implemented method as defined in Claim 11, the method further comprising transmitting the manifest to the streaming content player prior to filling the secondary content pod with secondary content identifiers.

15. The computer-implemented method as defined in Claim 11, the method further comprising dynamically reducing on increasing a quantity of secondary items that are included in subsequent secondary content pod files transmitted to the streaming content player.

16. The computer-implemented method as defined in Claim 11, the method further comprising filling the secondary content file based at least in part on an initial secondary content pod marker.

17. The computer-implemented method as defined in Claim 11, the method further comprising dynamically adjusting a length of at least one secondary content pod based at least in part on a rule, an algorithm, a user-type, and/or a session behavior.

18. The computer-implemented method as defined in Claim 11, the method further comprising instructing, via the content distribution system, the streaming content player to request secondary content at specified time intervals, thereby enabling a streaming content player cache to be prewarmed with second content items.

19. Non-transitory computer readable memory having program instructions stored thereon that when executed by at least one computing device cause the at least one computing device to perform operations comprising:
receive a request for a manifest from a streaming content player;
generate the requested manifest, the generated manifest comprising primary content locators for corresponding segments of primary content, a placeholder for a secondary content pod, and an indication as to when the secondary content pod is to be played;
provide the requested manifest, comprising the comprising primary content locators, the placeholder for a secondary content pod and the indication as to when the secondary content pod is to be played, to the streaming content player;
generate a secondary content pod request;
generate one or more secondary content pod decisions, comprising a decision as to how many items of secondary content are to be included in the secondary content pod;
receive from the streaming content player a request for a secondary content pod file;
generate the secondary content pod file, comprising locators for items of secondary content; and
provide the secondary content pod file to the streaming content player.

20. The non-transitory computer readable memory as defined in Claim 19, the operations further comprising dynamically generating the placeholder for the secondary content pod using a rule.

21. The non-transitory computer readable memory as defined in Claim 19, the operations further comprising transmitting the manifest to the streaming content player prior to filling the secondary content pod with secondary content identifiers.

22. The non-transitory computer readable memory as defined in Claim 19, the operations further comprising dynamically reducing or increasing a quantity of secondary items that are included in subsequent secondary content pod files transmitted to the streaming content player.

23. The non-transitory computer readable memory as defined in Claim 19, the operations further comprising dynamically adjusting a length of at least one secondary content pod based at least in part on a rule, an algorithm, a user-type, and/or a session behavior.
